# EUROPÄISCHE PATENTSCHRIFT

(11) **EP 3 298 303 B1**
(45) Veröffentlichungstag und Bekanntmachung des Hinweises auf die Patenterteilung: **03.04.2019**
(21) Anmeldenummer: 16717618.9
(22) Anmeldetag: 19.04.2016
(51) Int. Cl.: F16H 3/66, B60K 6/48, B60K 6/365, B60K 6/547

(54) **GETRIEBE FÜR EIN KRAFTFAHRZEUG UND HYBRIDANTRIEBSSTRANG DAMIT**
TRANSMISSION FOR A MOTOR VEHICLE AND HYBRID DRIVE TRAIN PROVIDED THEREWITH
BOÎTE DE VITESSES POUR UN VÉHICULE À MOTEUR ET GROUPE MOTOPROPULSEUR HYBRIDE POURVU DE LADITE BOÎTE DE VITESSES

(30) Priorität: 19.05.2015 DE 102015209141
(43) Veröffentlichungstag der Anmeldung: 28.03.2018
(73) Patentinhaber: ZF Friedrichshafen AG, 88046 Friedrichshafen (DE)
(72) Erfinder: BECK, Stefan, 88097 Eriskirch (DE); BREHMER, Martin, 88069 Tettnang (DE); HORN, Matthias, 88069 Tettnang (DE); KALTENBACH, Johannes, 88048 Friedrichshafen (DE); KING, Julian, 6830 Rankweil (AT); KNÖPKE, Bernd, 88682 Salem (DE); MORAW, Jens, 88045 Friedrichshafen (DE); MÜNCH, Eckehard, 32257 Bünde (DE); NIEDERBRUCKER, Gerhard, 88045 Friedrichshafen (DE); PAWLAKOWITSCH, Juri, 88263 Horgenzell (DE); SCHARR, Stephan, 88045 Friedrichshafen (DE); WARTH, Viktor, 88048 Friedrichshafen (DE); WECHS, Michael, 88138 Weißensberg (DE); ZIEMER, Peter, 88069 Tettnang (DE); GRIESMEIER, Uwe, 88677 Markdorf (DE); KUBERCZYK, Raffael, 88212 Ravensburg (DE)
(86) Internationale Anmeldenummer: PCT/EP2016/058593
(87) Internationale Veröffentlichungsnummer: WO 2016/184629

(56) Entgegenhaltungen:
- DE-A1- 10 213 820
- DE-A1-102012 025 369
- DE-A1-102012 219 733
- US-A1- 2007 219 036

## Beschreibung

Die Erfindung betrifft ein Getriebe für ein Kraftfahrzeug mit einer Eingangswelle, einer Abtriebswelle, drei Planetenradsätzen und zumindest fünf Schaltelemente. Die Erfindung betrifft ferner einen Hybridantriebsstrang für ein Kraftfahrzeug.

Ein Getriebe bezeichnet hier insbesondere ein mehrgängiges Getriebe, bei dem eine Vielzahl von Gängen, also Übersetzungsverhältnisse zwischen der Eingangswelle und der Abtriebswelle, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Ein Automatikgetriebe für ein Fahrzeug gemäß dem Oberbegriff des Patentanspruchs 1 ist aus Fig. 7 der Offenlegung DE 102 13 820 A1 bekannt. Allerdings weist dieses Automatikgetriebe keine elektrische Maschine auf.

Im Stand der Technik ist es bekannt, ein bestehendes Automatikgetriebe um eine elektrische Maschine zu erweitern, um einen rein elektrischen oder einen hybridischen Fahrbetrieb eines Kraftfahrzeugs mittels dem Automatikgetriebe zu ermöglichen. Üblicherweise wird ein Rotor der elektrischen Maschine dazu drehfest mit der Eingangswelle verbunden. Der Rotor kann aber auch an einer Welle des Automatikgetriebes angebunden sein, welche weder Eingangs- noch Abtriebswelle ist. Beispielhaft sei hierzu die Offenlegung DE 10 2007 005 438 A1 der Anmelderin genannt. Allerdings kann die elektrische Maschine gemäß der Lehre dieser Offenlegung nicht in allen Gängen dieses Automatikgetriebes Leistung abgeben oder aufnehmen, da sie an derselben Welle angeordnet ist wie eine Bremse des Automatikgetriebes.

Es ist auch bekannt die elektrische Maschine über eine feste Vorübersetzung zur Eingangswelle an ein bestehendes Automatikgetriebe anzubinden. Beispielhaft sei hierzu die Offenlegung DE 10 2008 040 498 A1 der Anmelderin genannt. Darin ist ein Hybridmodul mit einer Übersetzungsstufe vorgesehen, welches dem eigentlichen Automatikgetriebe vorangeschaltet ist. Durch die feste Vorübersetzung kann die elektrische Maschine auf höhere Drehzahlen und geringeres Drehmoment hin ausgelegt werden, wodurch die elektrische Maschine einen geringen Bauraumbedarf aufweist. Jedoch benötigt das Automatikgetriebe gemäß dem Stand der Technik dazu einen zusätzlichen Planetenradsatz, wodurch der Bauaufwand des Automatikgetriebes erhöht wird.

Es ist daher Aufgabe der Erfindung ein Getriebe für ein Kraftfahrzeug bereitzustellen, welche eine integrale elektrische Maschine mit Vorübersetzung zur Bereitstellung hybrid-typischer Funktionalitäten in sämtlichen Gängen des Getriebes aufweist ohne dessen Bauaufwand unnötig zu vergrößern. Darüber hinaus soll das Getriebe eine einfache, kompakte Bauweise und einen hohen mechanischen Wirkungsgrad aufweisen.

Die Aufgabe wird gelöst durch die Merkmale des Patentanspruchs 1. Vorteilhafte Weiterbildungen ergeben sich aus den abhängigen Patentansprüchen, der Beschreibung und aus den Figuren.

Das Getriebe weist drei Planetenradsätzen sowie zumindest fünf Schaltelemente auf, deren selektives Eingreifen zumindest acht schaltbare Vorwärtsgänge zwischen einer Eingangswelle und einer Abtriebswelle des Getriebes bewirken.

Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Der erste, zweite und dritte Planetenradsatz weisen je ein erstes, zweites und drittes Element auf. Das erste Element wird durch ein Sonnenrad des jeweiligen Planetenradsatzes gebildet. Ist der Planetenradsatz als ein Minus-Radsatz ausgebildet, so wird das zweite Element durch einen Steg des Planetenradsatzes gebildet, und das dritte Element durch ein Hohlrad des Planetenradsatzes. Ist der Planetenradsatz als ein Plus-Radsatz ausgebildet, so wird das zweite Element durch das Hohlrad des Planetenradsatzes gebildet, und das dritte Element durch den Steg des Planetenradsatzes.

Das erste Element des ersten Planetenradsatzes ist ständig drehfest festgesetzt. Das zweite Element des ersten Planetenradsatzes ist mit der Eingangswelle ständig verbunden. Das erste Element des zweiten Planetenradsatzes ist mit dem ersten Element des dritten Planetenradsatzes ständig verbunden. Das zweite Element des zweiten Planetenradsatzes ist mit dem dritten Element des dritten Planetenradsatzes in sämtlichen Vorwärtsgängen verbunden. Das dritte Element des dritten Planetenradsatzes ist ständig mit der Abtriebswelle verbunden.

Durch Schließen des ersten Schaltelements ist das dritte Element des zweiten Planetenradsatzes drehfest festsetzbar, indem das dritte Element des zweiten Planetenradsatzes mit einem Gehäuse des Getriebes oder mit einem anderen drehfesten Bauelement des Getriebes drehfest verbunden wird. Durch Schließen des zweiten Schaltelements wird eine drehfeste Verbindung zwischen der Eingangswelle und dem ersten Element des zweiten Planetenradsatzes hergestellt. Durch Schließen des dritten Schaltelements wird eine drehfeste Verbindung zwischen der Eingangswelle und dem zweiten Element des dritten Planetenradsatzes hergestellt. Durch Schließen des vierten Schaltelements wird eine drehfeste Verbindung zwischen dem dritten Element des ersten Planetenradsatzes und dem ersten Element des zweiten Planetenradsatzes hergestellt. Durch Schließen des fünften Schaltelements wird eine drehfeste Verbindung zwischen dem dritten Element des ersten Planetenradsatzes und dem dritten Element des zweiten Planetenradsatzes hergestellt.

Erfindungsgemäß ist ein Rotor einer elektrischen Maschine mit dem dritten Element des ersten Planetenradsatzes ständig drehfest verbunden. Da das erste Element des ersten Planetenradsatzes ständig drehfest festgesetzt ist und das zweite Element des ersten Planetenradsatzes ständig mit der Eingangswelle verbunden ist, ergibt sich eine gangunabhängige feste Übersetzung zwischen der Eingangswelle und dem dritten Element des ersten Planetenradsatzes. Dabei dreht der Rotor der elektrischen Maschine in jedem Gang mit einer höheren Drehzahl als die Eingangswelle. Somit kann die elektrische Maschine für höhere Drehzahlen und geringerem Drehmoment ausgelegt werden, wodurch die elektrische Maschine kleiner und kostengünstiger herzustellen ist. Darüber hinaus ist der erste Planetenradsatz an der Bildung der Gänge beteiligt. Es ist also kein zusätzlicher Planetenradsatz zur Bildung der Vorübersetzung für die elektrische Maschine erforderlich. Das dritte Element des ersten Planetenradsatzes weist zudem in jedem Gang eine Drehzahl auf, was im weiteren Verlauf noch gezeigt wird. Das Getriebe ermöglicht daher in jedem Gang sowohl eine Leistungsabgabe als auch eine Leistungsaufnahme mittels der elektrischen Maschine.

Durch selektives Betätigen der ersten bis fünften Schaltelemente sind zumindest acht Vorwärtsgänge zwischen der Eingangswelle und der Abtriebswelle automatisiert schaltbar. Der erste Vorwärtsgang wird durch Schließen des ersten Schaltelements und des zweiten Schaltelements gebildet. Der zweite Vorwärtsgang wird durch Schließen des ersten Schaltelements und des vierten Schaltelements gebildet. Der dritte Vorwärtsgang wird durch Schließen des ersten Schaltelements und des dritten Schaltelements gebildet. Der vierte Vorwärtsgang wird durch Schließen des dritten Schaltelements und des vierten Schaltelements gebildet. Der fünfte Vorwärtsgang wird durch Schließen des zweiten Schaltelements und des dritten Schaltelements gebildet. Der sechste Vorwärtsgang wird durch Schließen des dritten Schaltelements und des fünften Schaltelements gebildet. Der siebente Vorwärtsgang wird durch Schließen des zweiten Schaltelements und des fünften Schaltelements gebildet. Der achte Vorwärtsgang wird durch Schließen des vierten Schaltelements und des fünften Schaltelements gebildet. Durch diese Zuordnung des ersten bis fünften Schaltelements zu den einzelnen Vorwärtsgängen wird, bei geeigneter Wahl der Standgetriebeübersetzung des Planetenradsätze, eine für die Anwendung im Kraftfahrzeug gut geeignete Übersetzungsreihe erzielt. Zudem weisen zwei benachbarte Gänge stets ein Schaltelement auf, das in beiden diesen Gängen geschlossen ist. Bei einem Schaltvorgang in einen benachbarten Gang muss daher nur ein Schaltelement geöffnet und ein Schaltelement geschlossen werden. Dies vereinfacht den Schaltvorgang und verkürzt die Schaltdauer.

Vorzugsweise ist das erste Schaltelement als formschlüssiges Schaltelement ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Beispielsweise kann das erste Schaltelement als Klauen-Schaltelement ausgeführt sein, welches auch ohne eine Synchronisiereinrichtung ausgebildet sein kann. Durch die im geöffneten Zustand geringen Schleppverluste wird der Wirkungsgrad des Getriebes weiter verbessert, besonders da das erste Schaltelement lediglich im ersten bis dritten Vorwärtsgang des Kraftfahrzeugs geschlossen ist. Das erste Schaltelement ist daher bei Betrieb des Getriebes im Kraftfahrzeug überwiegend geöffnet. Da das erste Schaltelement lediglich im ersten bis dritten Vorwärtsgang geschlossen ist, wird das Schaltelement bei Schaltvorgängen in einen höheren Gang stets geöffnet, aber nicht geschlossen. Ein Öffnen eines Klauen-Schaltelements ist erheblich einfacher als der Schließ-Vorgang, da beim Schließen die Klauen des Klauenschaltelements erst in die dafür vorgesehen Lücken einrücken müssen, während beim Öffnen die Klauen lediglich lastfrei gestellt werden müssen. Beide Vorgänge benötigen Zeit, wobei besonders bei Schaltvorgängen von einem niedrigen Gang in einen höheren Gang die Schaltzeit aus fahrdynamischen Gründen möglichst kurz sein soll. Da das erste Schaltelement bei Schaltvorgängen in einen höheren Gang jedoch nie geschlossen, sondern lediglich geöffnet werden muss, besteht durch die Ausbildung des ersten Schaltelements als formschlüssiges Schaltelement keine Einschränkung hinsichtlich der Schaltdauer.

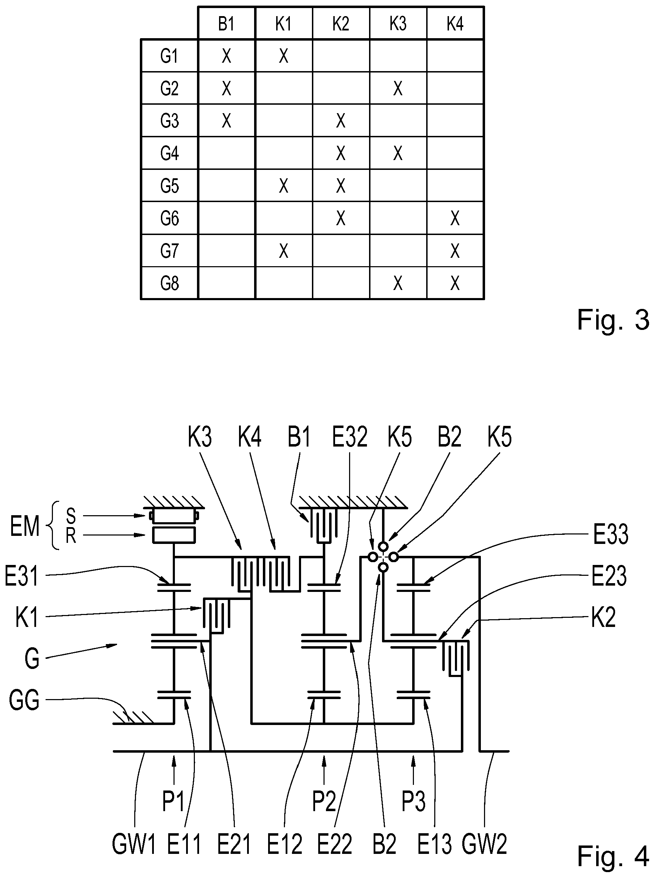

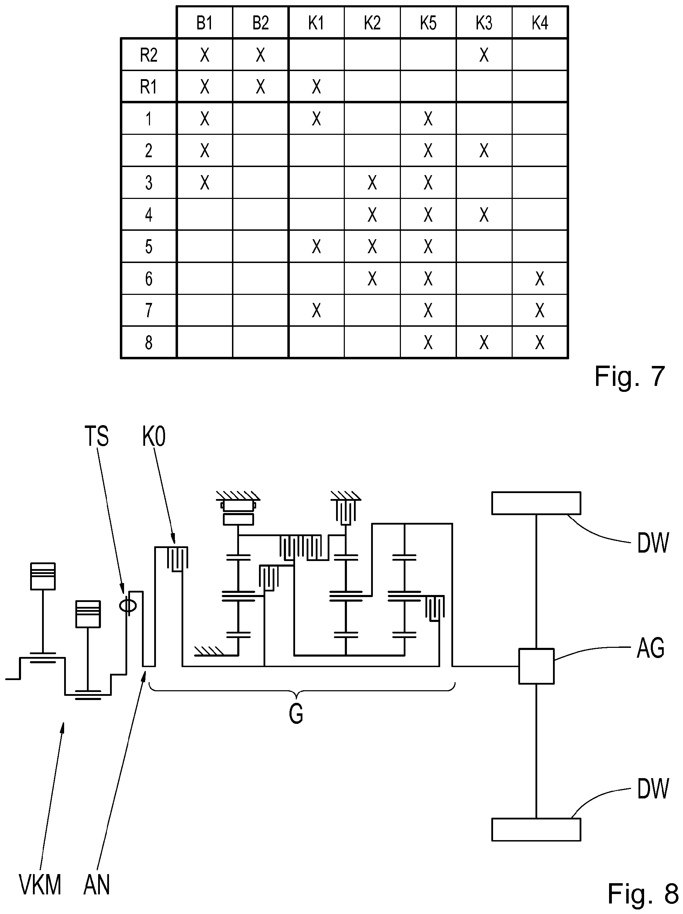

Gemäß einer Ausgestaltung weist das Getriebe ein sechstes und ein siebentes Schaltelement auf. Durch Schließen des sechsten Schaltelements wird eine drehfeste Verbindung zwischen dem zweiten Element des zweiten Planetenradsatzes und dem dritten Element des dritten Planetenradsatzes hergestellt. Durch Schließen des siebenten Schaltelements ist das zweite Element des dritten Planetenradsatzes drehfest festsetzbar, indem es über das siebente Schaltelement mit dem Gehäuse oder mit einem anderen drehfesten Bauelement des Getriebes drehfest verbunden wird. Durch diese spezifische Ausbildung des Getriebes ist die Bildung von zumindest einem mechanischen Rückwärtsgang bei gleichzeitiger Ausbildung des Getriebes als sogenanntes "Front-Längs-Getriebe" für ein Kraftfahrzeug möglich, also einem Getriebe mit koaxialem Antrieb und Abtrieb an axial gegenüberliegenden Enden des Getriebes. Das im Stand der Technik DE 102 13 820 A1 in Fig. 7 dargestellte Automatikgetriebe weist ebenso eine als B-2 bezeichnete Bremse zum drehfesten Festsetzen des als C3 bezeichneten Stegs des als G3 bezeichneten dritten Planetenradsatzes auf. Jedoch ist dieses Automatikgetriebe als sogenanntes "Front-Quer-Getriebe", also mit achsparallelem Antrieb und Abtrieb ausgebildet. Dazu weist dieses Automatikgetriebe ein als 19' bezeichnetes Gegenrad auf, welches über eine Außenverzahnung mit einer nicht dargestellten achsparallelen Differentialwelle kämmt. Eine Ausbildung als Front-Längs-Getriebe ist dabei nicht ohne weiteres möglich, da durch die Anbindung des Stegs C3 an die Bremse B-2 die Abtriebswelle nicht zu einem axialen Ende des Automatikgetriebes führbar ist. Diese Problemstellung wird in der gegenständlichen Patentanmeldung durch das sechste Schaltelement gelöst, welches dazu eingerichtet ist die Verbindung zwischen dem zweiten Element des zweiten Planetenradsatzes und dem dritten Element des dritten Planetenradsatzes schaltbar zu unterbrechen. Denn diese Verbindung ist für die Bildung eines mechanischen Rückwärtsgangs nicht erforderlich. Die Verbindung ist jedoch für die Bildung der Vorwärtsgänge erforderlich. Daher ist das sechste Schaltelement in sämtlichen Vorwärtsgängen geschlossen, während das siebente Schaltelement in sämtlichen Vorwärtsgängen geöffnet ist. Der dritte Planetenradsatz ist dabei als Minus-Radsatz ausgebildet. Dadurch wird auch eine Ausbildung des Getriebes als "Front-Längs-Getriebe" für ein Kraftfahrzeug ermöglicht. Dies ist insbesondere durch Fig. 4 anschaulich dargestellt.

Vorzugsweise sind das sechste und siebente Schaltelement als formschlüssige Schaltelemente, insbesondere als Klauen-Schaltelemente ausgebildet, wodurch der mechanische Wirkungsgrad des Getriebes verbessert wird.

Gemäß einer möglichen Ausgestaltung weisen das sechste und siebente Schaltelement eine gemeinsame Schaltelementhälfte auf. In anderen Worten sind das sechste und siebente Schaltelement als ein doppeltwirkendes Schaltelement aufgebaut, wobei durch Betätigung der gemeinsamen Schaltelementhälfte sowohl das sechste als auch das siebente Schaltelement betätigbar sind. Dadurch wird nur ein Aktuator zur Betätigung des sechsten und siebenten Schaltelements benötigt, wodurch der mechanische Aufbau des Getriebes vereinfacht wird.

Ein erster mechanischer Rückwärtsgang ergibt sich durch Schließen des ersten Schaltelements, des siebenten Schaltelements und des zweiten Schaltelements. Alternativ oder ergänzend dazu ergibt sich ein zweiter mechanischer Rückwärtsgang durch Schließen des ersten Schaltelements, des siebenten Schaltelements und des vierten Schaltelements. Das sechste Schaltelement ist in beiden mechanischen Rückwärtsgängen geöffnet. Dabei ist insbesondere der erste Rückwärtsgang vorteilhaft, da im ersten Vorwärtsgang ebenso das zweite Schaltelement geschlossen ist. Dies vereinfacht einen Schaltvorgang zwischen erstem Rückwärtsgang und erstem Vorwärtsgang. Erster und zweiter Rückwärtsgang können als Not-Rückwärtsgänge vorgesehen sein, da durch die elektrische Maschine bei Betrieb entgegen einer Vorzugsdrehrichtung und Einlegen eines der Vorwärtsgänge ebenso Rückwärtsgange bildbar sind.

Gemäß einer Ausgestaltung weist das Getriebe an einem axialen Ende eine Anschlusswelle auf, welche über ein achtes Schaltelement mit der Eingangswelle verbindbar ist. Durch das sechste Schaltelement kann eine mit der Anschlusswelle verbundene Antriebseinheit von der Antriebswelle des Getriebes entkoppelt werden, beispielsweise wenn das Kraftfahrzeug rein von der elektrischen Maschine des Getriebes angetrieben wird. Anschlusswelle und Abtriebswelle sind koaxial zueinander und an gegenüberliegenden Enden des Getriebes angeordnet. Das Getriebe ist also als "Front-Längs-Getriebe" für ein Kraftfahrzeug ausgebildet. Ausgehend von dem axialen Ende des Getriebes, dem die Anschlusswelle zugeordnet ist, sind die Planetenradsätze in folgender axialen Reihenfolge angeordnet: erster Planetenradsatz, zweiter Planetenradsatz, dritter Planetenradsatz. Dies ermöglicht einen kompakten Aufbau des Getriebes.

Gemäß einer alternativen Ausgestaltung weist das Getriebe ebenso das achte Schaltelement auf, über welches die Eingangswelle mit der Anschlusswelle verbindbar ist, wobei ausgehend von dem der Anschlusswelle zugeordneten axialen Ende des Getriebes die Planetenradsätze in folgender axialen Reihenfolge angeordnet sind: dritter Planetenradsatz, zweiter Planetenradsatz, erster Planetenradsatz. Diese Ausgestaltung eignet sich besonders für ein "Front-Quer-Getriebe" für ein Kraftfahrzeug, wobei die Abtriebswelle eine Verzahnung aufweist welche mit einer Verzahnung einer zur Eingangswelle achsparallelen Welle kämmt. Über diese achsparallele Welle wird die Leistung der Abtriebswelle zu den Rädern des Kraftfahrzeugs übertragen.

Gemäß einer Ausführungsform ist das achte Schaltelement als formschlüssiges Schaltelement ausgebildet. Dadurch kann der Wirkungsgrad des Kraftfahrzeugetriebes verbessert werden, da das achte Schaltelement im geöffneten Zustand wesentlich geringere Schleppverluste erzeugt als ein kraftschlüssiges Schaltelement, wie beispielsweise eine Lamellenkupplung.

Gemäß einer alternativen Ausführungsform ist das achte Schaltelement als ein kraftschlüssiges Schaltelement mit variabler Drehmomentübertragungsfähigkeit ausgebildet, beispielsweise als trockene oder nasse Lamellenkupplung. Eine Lamellenkupplung besteht aus einem Innenlamellenträger und einem Außenlamellenträger, wobei eine Vielzahl von Innenlamellen mit dem Innenlamellenträger verbunden ist, und eine Vielzahl von Außenlamellen mit dem Außenlamellenträger verbunden ist. Die Innenlamellen und Außenlamellen sind alternierend angeordnet und überlappen einander. Wird normal zur Lamellenfläche der Lamellen eine Kraft auf die Lamellen aufgebracht, so wird ein Drehmoment von einem Lamellenträger zum anderen Lamellenträger durch Reibung zwischen Innenlamellen und Außenlamellen übertragen. Das von einem Lamellenträger zum anderen Lamellenträger übertragene Drehmoment hängt dabei von der aufgebrachten Kraft ab. Ist die Kraft groß genug um durch Kraftschluss eine Differenzdrehzahl zwischen Innenlamellen und Außenlamellen zu unterbinden, so wird das gesamte Drehmoment übertragen. Reicht die Kraft dazu nicht aus, so wird nur ein Teil des Drehmoments übertragen, wobei es zu einer Differenzdrehzahl zwischen Innenlamellen und Außenlamellen kommt. Dieser Zustand wird auch als Schlupfbetrieb bezeichnet. Durch Variation der auf die Lamellen aufgebrachten Kraft ist die Drehmomentübertragungsfähigkeit des achten Schaltelements einstellbar.

Vorzugsweise ist ein Abschnitt der Eingangswelle radial innerhalb des zweiten und dritten Planetenradsatzes angeordnet, wobei das dritte Schaltelement axial im Bereich des der Abtriebswelle zugeordneten axialen Endes des Getriebes angeordnet ist. Dadurch ist es möglich die axiale Baulänge des Getriebes zu reduzieren.

Vorzugsweise ist das zweite Schaltelement zumindest abschnittsweise radial innerhalb des vierten Schaltelements angeordnet. Dadurch kann die axiale Baulänge des Getriebes reduziert werden.

Das Getriebe kann Bestandteil eines Hybridantriebsstrangs eines Kraftfahrzeugs sein. Der Hybridantriebsstrang weist neben dem Getriebe auch eine Verbrennungskraftmaschine auf, welche mit der Anschlusswelle des Getriebes verbunden ist. Die Abtriebswelle des Getriebes ist mit einem Abtrieb verbunden, welcher mit Rädern des Kraftfahrzeugs verbunden ist. Der Hybridantriebsstrang ermöglicht mehrere Antriebsmodi des Kraftfahrzeugs. In einem elektrischen Fahrbetrieb wird das Kraftfahrzeug von der elektrischen Maschine des Getriebes angetrieben, wobei das achte Schaltelement geöffnet ist. In einem verbrennungsmotorischen Betrieb wird das Kraftfahrzeug von der Verbrennungskraftmaschine angetrieben, wobei das achte Schaltelement geschlossen ist. In einem hybridischen Betrieb wird das Kraftfahrzeug sowohl von der Verbrennungskraftmaschine als auch von der elektrischen Maschine des Getriebes angetrieben.

Das Getriebe ermöglicht eine Vielzahl an Möglichkeiten zur Bereitstellung einer Anfahrfunktion des Kraftfahrzeugs. Im verbrennungsmotorischen Betrieb kann das sechste Schaltelement als Anfahrelement dienen. Bei einer Fehlfunktion oder Überlastung des sechsten Schaltelements kann auch das zweite Schaltelement als Anfahrelement verwendet werden. Im elektrischen Fahrbetrieb kann die elektrische Maschine bei einem eingelegten Vorwärtsgang aus ihrer Null-Drehzahl heraus die Anfahrfunktion bereitstellen.

Eine elektrische Maschine besteht zumindest aus einem drehfesten Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden.

Ausführungsbeispiele der Erfindung sind nachfolgend anhand der beigefügten Figuren detailliert beschrieben.
- Fig. 1: zeigt schematisch ein Getriebe entsprechend eines ersten Ausführungsbeispiels der Erfindung.
- Fig. 2: zeigt schematisch ein Getriebe entsprechend eines zweiten Ausführungsbeispiels der Erfindung.
- Fig. 3: zeigt ein Schaltschema des Getriebes der ersten und zweiten Ausführungsbeispiele.
- Fig. 4: zeigt schematisch ein Getriebe entsprechend eines dritten Ausführungsbeispiels der Erfindung.
- Fig. 5: zeigt schematisch ein Getriebe entsprechend eines vierten Ausführungsbeispiels der Erfindung.
- Fig. 6: zeigt schematisch ein Getriebe entsprechend eines fünften Ausführungsbeispiels der Erfindung.
- Fig. 7: zeigt ein Schaltschema des Getriebes der dritten bis fünften Ausführungsbeispiele.
- Fig. 8: zeigt einen Hybridantriebstrang eines Kraftfahrzeugs.

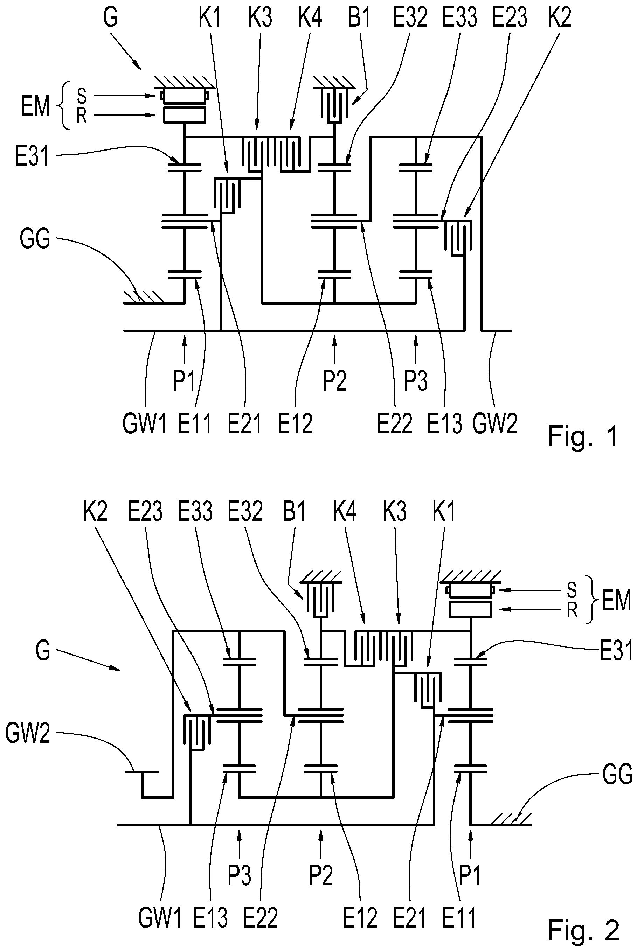

Fig. 1 zeigt schematisch ein Getriebe G für ein Kraftfahrzeug entsprechend eines ersten Ausführungsbeispiels der Erfindung. Das Getriebe G weist eine Eingangswelle GW1, eine Abtriebswelle GW2, einen ersten Planetenradsatz P1, einen zweiten Planetenradsatz P2, einen dritten Planetenradsatz P3 und eine elektrische Maschine EM auf, welche einen Stator S und einen Rotor R umfasst. Erster, zweiter und dritter Planetenradsatz P1, P2, P3 sind als Minus-Radsätze ausgebildet, und weisen je ein erstes Element E11, E12, E13 ein zweites Element E21, E22, E23 und ein drittes Element E31, E32, E33 auf. Das erste Element E11, E12, E13 ist einem Sonnenrad des jeweiligen Planetenradsatzes P1, P2, P3 zugeordnet. Das zweite Element E21, E22, E23 ist einem Steg des jeweiligen Planetenradsatzes P1, P2, P3 zugeordnet. Das dritte Element E31, E32, E33 ist einem Hohlrad des jeweiligen Planetenradsatzes P1, P2, P3 zugeordnet.

Das erste Element E11 des ersten Planetenradsatzes P1 ist ständig drehfest festgesetzt, indem es mit einem Gehäuse GG oder mit einem anderen drehfesten Bauelement verbunden ist. Das zweite Element E21 des ersten Planetenradsatzes P1 ist mit der Eingangswelle GW1 ständig verbunden. Das erste Element E12 des zweiten Planetenradsatzes P2 ist mit dem ersten Element E13 des dritten Planetenradsatzes P3 ständig verbunden. Das zweite Element E22 des zweiten Planetenradsatzes P2 ist mit dem dritten Element E33 des dritten Planetenradsatzes P3 ständig verbunden. Das dritte Element E33 des dritten Planetenradsatzes P3 ist ständig mit der Abtriebswelle GW2 verbunden. Das dritte Element E31 des ersten Planetenradsatzes P1 ist mit dem Rotor R der elektrischen Maschine EM ständig verbunden.

Das Getriebe G weist ferner zumindest fünf Schaltelemente auf. Durch Schließen des ersten Schaltelements B1 ist das dritte Element E32 des zweiten Planetenradsatzes P2 drehfest festsetzbar. Durch Schließen des zweiten Schaltelements K1 ist die Eingangswelle GW1 mit dem ersten Element E12 des zweiten Planetenradsatzes P2 verbindbar. Durch Schließen des dritten Schaltelements K2 ist die Eingangswelle GW1 mit dem zweiten Element E23 des dritten Planetenradsatzes P3 verbindbar. Durch Schließen des vierten Schaltelements K3 ist das dritte Element E31 des ersten Planetenradsatzes P1 mit dem ersten Element E12 des zweiten Planetenradsatzes P2 verbindbar. Durch Schließen des fünften Schaltelements K4 ist das dritte Element E31 des ersten Planetenradsatzes P1 mit dem dritten Element E32 des zweiten Planetenradsatzes P2 verbindbar. Die Schaltelemente B1, K1, K2, K3, K4 sind in Form von Lamellenschaltelementen dargestellt. Dies ist jedoch nicht limitierend anzusehen. Eine Auswahl der Schaltelemente B1, K1, K2, K3, K4 kann auch als Klauenschaltelemente ausgebildet sein, insbesondere das erste Schaltelement B1. Dies gilt für sämtliche Ausführungsbeispiele.

Das in Fig. 1 dargestellte Ausführungsbeispiel des Getriebes G ist als sogenanntes "Front-Längs-Getriebe" für ein Kraftfahrzeug ausgebildet. Eingangswelle GW1 und Abtriebswelle GW2 sind dementsprechend koaxial zueinander und an gegenüberliegenden axialen Enden des Getriebes G angeordnet. Das dritte Schaltelement K2 ist dabei axial im Bereich des der Abtriebswelle GW2 zugeordneten axialen Endes des Getriebes G angeordnet. Die Anbindung von Eingangswelle GW1 zum dritten Schaltelement K2 verläuft dabei radial innerhalb des zweiten und dritten Planetenradsatzes P2, P3. Das zweite Schaltelement K1 ist abschnittsweise radial innerhalb des vierten Schaltelements K3 angeordnet. Ausgehend von dem der Eingangswelle GW1 zugeordneten axialen Ende des Getriebes G sind die Planetenradsätze P1, P2, P3 in folgender axialen Reihenfolge angeordnet: erster Planetenradsatz P1, zweiter Planetenradsatz P2, dritter Planetenradsatz P3.

Fig. 2 zeigt schematisch ein Getriebe G entsprechend eines zweiten Ausführungsbeispiels der Erfindung. Im Unterschied zum in Fig. 1 dargestellten ersten Ausführungsbeispiel ist das Getriebe G nun als sogenanntes "Front-Quer-Getriebe" für ein Kraftfahrzeug ausgebildet. Die Abtriebswelle GW2 ist entsprechend am gleichen axialen Ende wie die Eingangswelle GW1 angeordnet. Die Abtriebswelle GW2 weist eine Außenverzahnung auf, welche dazu eingerichtet ist mit einer Außenverzahnung einer achsparallel zur Abtriebswelle GW2 angeordneten, nicht dargestellten Welle zu kämmen. Ausgehend vom axialen Ende des Getriebes G, dem sowohl Eingangswelle GW1 als auch Abtriebswelle GW2 zugeordnet sind, sind die Planetenradsätze P1, P2, P3 in folgender axialen Reihenfolge angeordnet: dritter Planetenradsatz P3, zweiter Planetenradsatz P2, erster Planetenradsatz P1. Die Anbindung von Eingangswelle GW1 zum dritten Schaltelement K2 verläuft dabei radial innerhalb des zweiten und dritten Planetenradsatzes P2, P3. Das zweite Schaltelement K1 ist abschnittsweise radial innerhalb des vierten Schaltelements K3 angeordnet.

Fig. 3 zeigt ein Schaltschema für ein Getriebe G gemäß dem ersten und zweiten Ausführungsbeispiel. In den Zeilen des Schaltschemas sind acht Vorwärtsgänge G1 bis G8 angeführt. In den Spalten des Schaltschemas ist durch ein ,x' dargestellt, welche der Schaltelemente B1, K1, K2, K3, K4 in welchem Vorwärtsgang G1 bis G8 geschlossen sind.

Fig. 4 zeigt schematisch ein Getriebe G entsprechend eines dritten Ausführungsbeispiels der Erfindung, welches im Wesentlichen dem ersten Ausführungsbeispiel entspricht. Das Getriebe G gemäß dem dritten Ausführungsbeispiel weist jedoch ein sechstes Schaltelement K5 und ein siebentes Schaltelement B2 auf. Durch Schließen des sechsten Schaltelements wird eine drehfeste Verbindung zwischen dem zweiten Element E22 des zweiten Planetenradsatzes P2 und dem dritten Element E33 des dritten Planetenradsatzes P3 hergestellt. Durch Schließen des siebenten Schaltelements B2 wird eine drehfeste Verbindung zwischen dem zweiten Element E23 des dritten Planetenradsatzes P3 und dem Gehäuse GG oder einem anderen drehfesten Bauelement des Getriebes G hergestellt. Das sechste und siebente Schaltelement K5, B2 sind dabei als formschlüssige Klauenschaltelemente ausgebildet und in unmittelbarer räumlicher Nähe zueinander angeordnet. Das sechste und siebente Schaltelement K5, B2 sind dabei so aufgebaut, dass nur eines der beiden Schaltelemente K5, B2 geschlossen sein kann. In einer Neutralstellung ist es auch möglich dass beide Schaltelemente K5, B2 geöffnet sind.

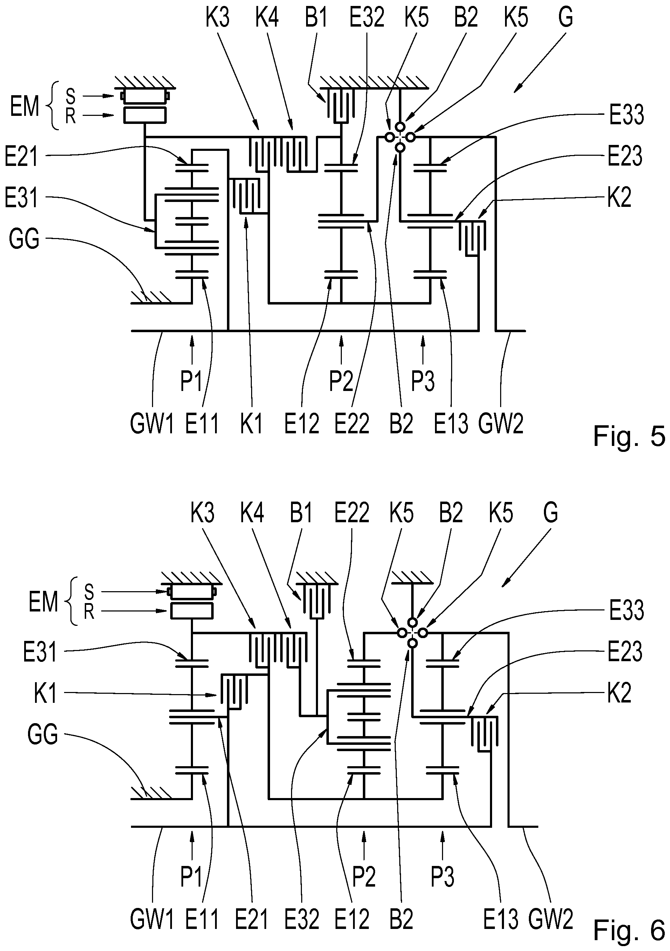

Fig. 5 zeigt schematisch ein Getriebe G entsprechend eines vierten Ausführungsbeispiels der Erfindung. Im Unterscheid zum dritten Ausführungsbeispiel ist der erste Planetenradsatz P1 im vierten Ausführungsbeispiel als Plus-Radsatz ausgebildet. Diese Veränderung ist ebenso im ersten oder zweiten Ausführungsbeispiel anwendbar.

Fig. 6 zeigt schematisch ein Getriebe G entsprechend eines fünften Ausführungsbeispiels der Erfindung. Im Unterscheid zum dritten Ausführungsbeispiel ist der zweite Planetenradsatz P2 im vierten Ausführungsbeispiel als Plus-Radsatz ausgebildet. Diese Veränderung ist ebenso im ersten oder zweiten Ausführungsbeispiel anwendbar.

In sämtlichen Ausführungsbeispielen können auch der erste und der zweite Planetenradsatz P1, P2 als Plus-Radsatz ausgebildet werden. Im ersten Ausführungsbeispiel kann jeder der Planetenradsätze P1, P2, P3 als Plus-Radsatz ausgebildet werden. Der Übersichtlichkeit halber sind diese Varianten jedoch nicht dargestellt.

Fig. 7 zeigt ein Schaltschema des Getriebes der dritten bis fünften Ausführungsbeispiele. In den Zeilen des Schaltschemas sind acht Vorwärtsgänge G1 bis G8 sowie ein erster und zweiter Rückwärtsgang R1, R2 angeführt. In den Spalten des Schaltschemas ist durch ein ,x' dargestellt, welche der Schaltelemente B1, K1, K2, K3, K4, K5, B2 in welchem Vorwärtsgang G1 bis G8, bzw. Rückwärtsgang R1, R2 geschlossen sind.

In sämtlichen Ausführungsbeispielen kann die Eingangswelle GW1 über ein achtes Schaltelement K0 mit einer Anschlusswelle AN verbindbar sein. Das achte Schaltelement K0 kann dabei entweder als kraftschlüssiges Schaltelement mit variabler Drehmomentübertragungsfähigkeit oder als formschlüssiges Schaltelement ausgebildet sein.

Fig. 8 zeigt einen Hybridantriebstrang eines Kraftfahrzeugs mit einem Getriebe G gemäß dem ersten Ausführungsbeispiel. Dies ist lediglich beispielhaft anzusehen. Der Hybridantriebsstrang könnte mit jedem der angeführten Ausführungsbeispiele des Getriebes G ausgeführt sein. Der Hybridantriebsstrang weist eine Verbrennungskraftmaschine VKM auf, die über einen Torsionsschwingungsdämpfer TS mit der Anschlusswelle AN des Getriebes G verbunden ist. Die Anschlusswelle AN ist über das achte Schaltelement K0 mit der Eingangswelle GW1 des Getriebes G verbindbar. Die Abtriebswelle GW2 ist mit einem Achsgetriebe AG antriebswirkverbunden. Vom Achsgetriebe AG ausgehend wird die Leistung, die an der Abtriebswelle GW2 anliegt, auf Räder DW des Kraftfahrzeugs verteilt. Im motorischen Betrieb der elektrischen Maschine EM wird dem Stator S über einen nicht dargestellten Wechselrichter elektrische Leistung zugeführt. Im generatorischen Betrieb der elektrischen Maschine EM führt der Stator S dem Wechselrichter elektrische Leistung zu. Der Wechselrichter wandelt dabei die Gleichspannung eines nicht dargestellten Energiespeichers in eine für die elektrische Maschine EM geeignete Wechselspannung, und umgekehrt.

### Bezugszeichen

- G: Getriebe
- GW1: Eingangswelle
- GW2: Abtriebswelle
- AN: Anschlusswelle
- GG: Gehäuse
- P1: Erster Planetenradsatz
- P2: Zweiter Planetenradsatz
- P3: Dritter Planetenradsatz
- EM: Elektrische Maschine
- R: Rotor
- S: Stator
- E11: Erstes Element des ersten Planetenradsatzes
- E21: Zweites Element des ersten Planetenradsatzes
- E31: Drittes Element des ersten Planetenradsatzes
- E12: Erstes Element des zweiten Planetenradsatzes
- E22: Zweites Element des zweiten Planetenradsatzes
- E32: Drittes Element des zweiten Planetenradsatzes
- E13: Erstes Element des dritten Planetenradsatzes
- E23: Zweites Element des dritten Planetenradsatzes
- E33: Drittes Element des dritten Planetenradsatzes
- B1: Erstes Schaltelement
- K1: Zweites Schaltelement
- K2: Drittes Schaltelement
- K3: Viertes Schaltelement
- K4: Fünftes Schaltelement
- K5: Sechstes Schaltelement
- B2: Siebentes Schaltelement
- K0: Achtes Schaltelement
- G1-G8: Erster bis achter Vorwärtsgang
- R1: Erster Rückwärtsgang
- R2: Zweiter Rückwärtsgang
- VKM: Verbrennungskraftmaschine
- DW: Räder
- AG: Achsgetriebe
- TS: Torsionsschwingungsdämpfer

## Patentansprüche

1. Getriebe (G) für ein Kraftfahrzeug, umfassend einen ersten, einen zweiten und einen dritten Planetenradsatz (P1, P2, P3) sowie ein erstes, zweites, drittes, viertes und fünftes Schaltelement (B1, K1, K2, K3, K4) deren selektives Eingreifen zumindest acht schaltbare Vorwärtsgänge (G1-G8) zwischen einer Eingangswelle (GW1) und einer Abtriebswelle (GW2) des Getriebes (G) bewirkt,
- wobei die Planetenradsätze (P1, P2, P3) je ein erstes Element (E11, E12, E13) ein zweites Element (E21, E22, E23) und ein drittes Element (E31, E32, E33) aufweisen, wobei das erste Element (E11, E12, E13) durch ein Sonnenrad des Planetenradsatzes (P1, P2, P3) gebildet ist, wobei das zweite Element (E21, E22, E23) im Falle eines Minus-Radsatzes durch einen Steg und im Falle eines Plus-Radsatzes durch ein Hohlrad des Planetenradsatzes (P1, P2, P3) gebildet ist, wobei das dritte Element (E31, E32, E33) im Falle eines Minus-Radsatzes durch das Hohlrad und im Falle eines Plus-Radsatzes durch den Steg des Planetenradsatzes (P1, P2, P3) gebildet ist,
- wobei das erste Element (E11) des ersten Planetenradsatzes (P1) ständig drehfest festgesetzt ist,
- wobei das zweite Element (E21) des ersten Planetenradsatzes (P1) mit der Eingangswelle (GW1) ständig verbunden ist,
- wobei das erste Element (E12) des zweiten Planetenradsatzes (P2) mit dem ersten Element (E13) des dritten Planetenradsatzes (P3) ständig verbunden ist,
- wobei das zweite Element (E22) des zweiten Planetenradsatzes (P2) mit dem dritten Element (E33) des dritten Planetenradsatzes (P3) in sämtlichen Vorwärtsgängen (G1-G8) verbunden ist,
- wobei das dritte Element (E33) des dritten Planetenradsatzes (P3) ständig mit der Abtriebswelle (GW2) verbunden ist,
- wobei durch Schließen des ersten Schaltelements (B1) das dritte Element (E32) des zweiten Planetenradsatzes (P2) drehfest festsetzbar ist,
- wobei durch Schließen des zweiten Schaltelements (K1) die Eingangswelle (GW1) mit dem ersten Element (E12) des zweiten Planetenradsatzes (P2) verbindbar ist,
- wobei durch Schließen des dritten Schaltelements (K2) die Eingangswelle (GW1) mit dem zweiten Element (E23) des dritten Planetenradsatzes (P3) verbindbar ist,
- wobei durch Schließen des vierten Schaltelements (K3) das dritte Element (E31) des ersten Planetenradsatzes (P1) mit dem ersten Element (E12) des zweiten Planetenradsatzes (P2) verbindbar ist,
- wobei durch Schließen des fünften Schaltelements (K4) das dritte Element (E31) des ersten Planetenradsatzes (P1) mit dem dritten Element (E32) des zweiten Planetenradsatzes (P2) verbindbar ist,
**dadurch gekennzeichnet, dass**
das dritte Element (E31) des ersten Planetenradsatzes (P1) mit einem Rotor (R) einer elektrischen Maschine (EM1) ständig drehfest verbunden ist.

2. Getriebe (G) nach Anspruch 1, **dadurch gekennzeichnet, dass** sich
- der erste Vorwärtsgang (G1) durch Schließen des ersten Schaltelements (B1) und des zweiten Schaltelements (K1),
- der zweite Vorwärtsgang (G2) durch Schließen des ersten Schaltelements (B1) und des vierten Schaltelements (K3),
- der dritte Vorwärtsgang (G3) durch Schließen des ersten Schaltelements (B1) und des dritten Schaltelements (K2),
- der vierte Vorwärtsgang (G4) durch Schließen des dritten Schaltelements (K2) und des vierten Schaltelements (K3),
- der fünfte Vorwärtsgang (G5) durch Schließen des zweiten Schaltelements (K1) und des dritten Schaltelements (K2),
- der sechste Vorwärtsgang (G6) durch Schließen des dritten Schaltelements (K2), des fünften Schaltelements (K4) und
- der siebente Vorwärtsgang (G7) durch Schließen des zweiten Schaltelements (K1) und des fünften Schaltelements (K4), und
- der achte Vorwärtsgang (G8) durch Schließen des vierten Schaltelements (K3) und des fünften Schaltelements (K4) ergibt.

3. Getriebe (G) nach Anspruch 1 oder Anspruch 2, **dadurch gekennzeichnet, dass** das erste Schaltelement (B1) als formschlüssiges Schaltelement, insbesondere als Klauenschaltelement ausgebildet ist.

4. Getriebe (G) nach einem der vorangehenden Ansprüche, **dadurch gekennzeichnet, dass** das Getriebe (G) ein sechstes und ein siebentes Schaltelement (K5, B2) aufweist,
- wobei durch Schließen des sechsten Schaltelements (K5) das zweite Element (E22) des zweiten Planetenradsatzes (P2) mit dem dritten Element (E33) des dritten Planetenradsatzes (P3) verbindbar ist,
- wobei durch Schließen des siebenten Schaltelements (B2) das zweite Element (E23) des dritten Planetenradsatzes (P3) drehfest festsetzbar ist,
- wobei das sechste Schaltelement (K5) in sämtlichen Vorwärtsgängen (G1-G8) geschlossen ist und das siebente Schaltelement (B2) in sämtlichen Vorwärtsgängen (G1-G8) geöffnet ist, und
- wobei der dritte Planetenradsatz (P3) als Minus-Radsatz ausgebildet ist.

5. Getriebe (G) nach Anspruch 4, **dadurch gekennzeichnet, dass** das sechste und siebente Schaltelement (K5, B2) als formschlüssige Schaltelemente ausgebildet sind.

6. Getriebe (G) nach Anspruch 5, **dadurch gekennzeichnet, dass** das sechste und siebente Schaltelement (K5, B2) eine gemeinsame Schaltelementhälfte aufweisen.

7. Getriebe (G) nach einem der Ansprüche 4 bis 6, **dadurch gekennzeichnet, dass** sich ein erster Rückwärtsgang (R1) durch Schließen des ersten Schaltelements (B1), des zweiten Schaltelements (K1) und des siebenten Schaltelements (B2) ergibt.

8. Getriebe (G) nach einem der Ansprüche 4 bis 7, **dadurch gekennzeichnet, dass** sich ein zweiter Rückwärtsgang (R2) durch Schließen des ersten Schaltelements (B1), des vierten Schaltelements (K3) und des siebenten Schaltelements (B2) ergibt.

9. Getriebe (G) nach einem der vorangehenden Ansprüche, **dadurch gekennzeichnet, dass** das Getriebe (G) an einem axialen Ende eine Anschlusswelle (AN) aufweist, welche über ein achtes Schaltelement (K0) mit der Eingangswelle (GW1) verbindbar ist, wobei Anschlusswelle (AN) und Abtriebswelle (GW2) koaxial zueinander und an gegenüberliegenden axialen Enden des Getriebes (G) angeordnet sind, wobei ausgehend von dem der Anschlusswelle (AN) zugeordneten axialen Ende des Getriebes (G) die Planetenradsätze (P1, P2, P3) in folgender axialer Reihenfolge angeordnet sind: erster Planetenradsatz (P1), zweiter Planetenradsatz (P2), dritter Planetenradsatz (P3).

10. Getriebe (G) nach einem der Ansprüche 1 bis 8, **dadurch gekennzeichnet, dass** das Getriebe (G) an einem axialen Ende eine Anschlusswelle (AN) aufweist, welche über ein achtes Schaltelement (K0) mit der Eingangswelle (GW1) verbindbar ist, wobei ausgehend von dem der Anschlusswelle (AN) zugeordneten axialen Ende des Getriebes (G) die Planetenradsätze (P1, P2, P3) in folgender axialer Reihenfolge angeordnet sind: dritter Planetenradsatz (P3), zweiter Planetenradsatz (P2), erster Planetenradsatz (P1).

11. Getriebe (G) nach einem der Ansprüche 9 bis 10, **dadurch gekennzeichnet, dass** das achte Schaltelement (K0) als formschlüssiges Schaltelement ausgebildet ist.

12. Getriebe (G) nach einem der Ansprüche 9 bis 10, **dadurch gekennzeichnet, dass** das achte Schaltelement (K0) als kraftschlüssiges Schaltelement mit variabler Drehmomentübertragungsfähigkeit ausgebildet ist.

13. Getriebe (G) nach einem der Ansprüche 1 bis 12, **dadurch gekennzeichnet, dass** ein Abschnitt der Eingangswelle (GW1) radial innerhalb des zweiten und dritten Planetenradsatzes (P2, P3) angeordnet ist, wobei das dritte Schaltelement (K2) axial im Bereich des der Abtriebswelle (GW2) zugeordneten axialen Ende des Getriebes (G) angeordnet ist.

14. Getriebe (G) nach einem der vorangehenden Ansprüche, **dadurch gekennzeichnet, dass** das zweite Schaltelement (K1) zumindest abschnittsweise radial innerhalb des vierten Schaltelements (K3) angeordnet ist.

15. Hybridantriebsstrang für ein Kraftfahrzeug mit einem Getriebe (G) nach einem der Ansprüche 1 bis 14.

## Claims

1. Transmission (G) for a motor vehicle, comprising a first, a second and a third planetary gear set (P1, P2, P3) and a first, second, third, fourth and fifth shifting element (B1, K1, K2, K3, K4), the selective engagement of which brings about at least eight shiftable forward gears (G1-G8) between an input shaft (GW1) and an output shaft (GW2) of the transmission (G),
- the planetary gear sets (P1, P2, P3) having in each case a first element (E11, E12, E13) and a second element (E21, E22, E23) and a third element (E31, E32, E33), the first element (E11, E12, E13) being formed by way of a sun gear of the planetary gear set (P1, P2, P3), the second element (E21, E22, E23) being formed by way of a spider in the case of a negative gear set and being formed by way of an internal gear of the planetary gear set (P1, P2, P3) in the case of a positive gear set, the third element (E31, E32, E33) being formed by way of the internal gear in the case of a negative gear set and being formed by way of the spider of the planetary gear set (P1, P2, P3) in the case of a positive gear set,
- the first element (E11) of the first planetary gear set (P1) being fixed permanently in a torque-proof manner,
- the second element (E21) of the first planetary gear set (P1) being connected permanently to the input shaft (GW1),
- the first element (E12) of the second planetary gear set (P2) being connected permanently to the first element (E13) of the third planetary gear set (P3),
- the second element (E22) of the second planetary gear set (P2) being connected to the third element (E33) of the third planetary gear set (P3) in all forward gears (G1-G8),
- the third element (E33) of the third planetary gear set (P3) being connected permanently to the output shaft (GW2),
- it being possible for the third element (E32) of the second planetary gear set (P2) to be fixed in a torque-proof manner by way of closure of the first shifting element (B1),
- it being possible for the input shaft (GW1) to be connected to the first element (E12) of the second planetary gear set (P2) by way of closure of the second shifting element (K1),
- it being possible for the input shaft (GW1) to be connected to the second element (E23) of the third planetary gear set (P3) by way of closure of the third shifting element (K2),
- it being possible for the third element (E31) of the first planetary gear set (P1) to be connected to the first element (E12) of the second planetary gear set (P2) by way of closure of the fourth shifting element (K3),
- it being possible for the third element (E31) of the first planetary gear set (P1) to be connected to the third element (E32) of the second planetary gear set (P2) by way of closure of the fifth shifting element (K4),
**characterized in that**
the third element (E31) of the first planetary gear set (P1) is connected permanently in a torque-proof manner to a rotor (R) of an electric machine (EM1).

2. Transmission (G) according to Claim 1, **characterized in that**
- the first forward gear (G1) arises by way of closure of the first shifting element (B1) and the second shifting element (K1),
- the second forward gear (G2) arises by way of closure of the first shifting element (B1) and the fourth shifting element (K3),
- the third forward gear (G3) arises by way of closure of the first shifting element (B1) and the third shifting element (K2),
- the fourth forward gear (G4) arises by way of closure of the third shifting element (K2) and the fourth shifting element (K3),
- the fifth forward gear (G5) arises by way of closure of the second shifting element (K1) and the third shifting element (K2),
- the sixth forward gear (G6) arises by way of closure of the third shifting element (K2) and the fifth shifting element (K4), and
- the seventh forward gear (G7) arises by way of closure of the second shifting element (K1) and the fifth shifting element (K4), and
- the eighth forward gear (G8) arises by way of closure of the fourth shifting element (K3) and the fifth shifting element (K4).

3. Transmission (G) according to Claim 1 or Claim 2, **characterized in that** the first shifting element (B1) is configured as a positively locking shifting element, in particular as a dog shifting element.

4. Transmission (G) according to one of the preceding claims, **characterized in that** the transmission (G) has a sixth and a seventh shifting element (K5, B2),
- it being possible for the second element (E22) of the second planetary gear set (P2) to be connected to the third element (E33) of the third planetary gear set (P3) by way of closure of the sixth shifting element (K5),
- it being possible for the second element (E23) of the third planetary gear set (P3) to be fixed in a torque-proof manner by way of closure of the seventh shifting element (B2),
- the sixth shifting element (K5) being closed in all forward gears (G1-G8), and the seventh shifting element (B2) being open in all forward gears (G1-G8), and
- the third planetary gear set (P3) being configured as a negative gear set.

5. Transmission (G) according to Claim 4, **characterized in that** the sixth and seventh shifting elements (K5, B2) are configured as positively locking shifting elements.

6. Transmission (G) according to Claim 5, **characterized in that** the sixth and seventh shifting elements (K5, B2) have a common shifting element half.

7. Transmission (G) according to one of Claims 4 to 6, **characterized in that** a first reverse gear (R1) arises by way of closure of the first shifting element (B1), the second shifting element (K1) and the seventh shifting element (B2).

8. Transmission (G) according to one of Claims 4 to 7, **characterized in that** a second reverse gear (R2) arises by way of closure of the first shifting element (B1), the fourth shifting element (K3) and the seventh shifting element (B2).

9. Transmission (G) according to one of the preceding claims, **characterized in that**, at one axial end, the transmission (G) has a connecting shaft (AN) which can be connected to the input shaft (GW1) via an eighth shifting element (K0), the connecting shaft (AN) and the output shaft (GW2) being arranged coaxially with respect to one another and at opposite axial ends of the transmission (G), the planetary gear sets (P1, P2, P3) being arranged in the following axial sequence starting from that axial end of the transmission (G) which is assigned to the connecting shaft (AN): first planetary gear set (P1), second planetary gear set (P2), third planetary gear set (P3).

10. Transmission (G) according to one of Claims 1 to 8, **characterized in that**, at one axial end, the transmission (G) has a connecting shaft (AN) which can be connected to the input shaft (GW1) via an eighth shifting element (K0), the planetary gear sets (P1, P2, P3) being arranged in the following axial sequence starting from that axial end of the transmission (G) which is assigned to the connecting shaft (AN): third planetary gear set (P3), second planetary gear set (P2), first planetary gear set (P1) .

11. Transmission (G) according to either of Claims 9 and 10, **characterized in that** the eighth shifting element (K0) is configured as a positively locking shifting element.

12. Transmission (G) according to either of Claims 9 and 10, **characterized in that** the eighth shifting element (K0) is configured as a non-positive shifting element with a variable torque transmission capability.

13. Transmission (G) according to one of Claims 1 to 12, **characterized in that** a section of the input shaft (GW1) is arranged radially within the second and third planetary gear sets (P2, P3), the third shifting element (K2) being arranged axially in the region of that axial end of the transmission (G) which is assigned to the output shaft (GW2).

14. Transmission (G) according to one of the preceding claims, **characterized in that** the second shifting element (K1) is arranged at least in sections radially within the fourth shifting element (K3).

15. Hybrid drive train for a motor vehicle having a transmission (G) according to one of Claims 1 to 14.

## Revendications

1. Boîte de vitesses (G) pour un véhicule à moteur, comprenant un premier, un deuxième et un troisième trains planétaires (P1, P2, P3) ainsi qu'un premier, un deuxième, un troisième, un quatrième et un cinquième éléments de commutation (B1, K1, K2, K3, K4) dont l'engagement sélectif réalise au moins huit rapports avant commutables (G1 - G8) entre un arbre de commande (GW1) et un arbre de sortie (GW2) de la boîte de vitesses (G),
- dans laquelle les trains planétaires (P1, P2, P3) présentent chacun un premier élément (E11, E12, E13), un deuxième élément (E21, E22, E23) et un troisième élément (E31, E32, E33), dans lequel le premier élément (E11, E12, E13) est formé par une roue solaire du train planétaire (P1, P2, P3), dans laquelle le deuxième élément (E21, E22, E23) est formé dans le cas d'une paire de roues moins par une nervure et dans le cas d'une paire de roues plus par une couronne du train planétaire (P1, P2, P3), dans laquelle le troisième élément (E31, E32, E33) est formé dans le cas d'une paire de roues moins par la couronne et dans le cas d'une paire de roues plus par la nervure du train planétaire (P1, P2, P3),
- dans laquelle le premier élément (E11) du premier train planétaire (P1) est en permanence calé en rotation,
- dans laquelle le deuxième élément (E21) du premier train planétaire (P1) est en permanence relié à l'arbre de commande (GW1),
- dans laquelle le premier élément (E12) du deuxième train planétaire (P2) est en permanence relié au premier élément (E13) du troisième train planétaire (P3),
- dans laquelle le deuxième élément (E22) du deuxième train planétaire (P2) est relié au troisième élément (E33) du troisième train planétaire (P3) dans tous les rapports avant (G1 - G8),
- dans laquelle le troisième élément (E33) du troisième train planétaire (P3) est en permanence relié à l'arbre de sortie (GW2),
- dans laquelle le troisième élément (E32) du deuxième train planétaire (P2) peut être calé en rotation par la fermeture du premier élément de commutation (B1),
- dans laquelle l'arbre de commande (GW1) peut être relié au premier élément (E12) du deuxième train planétaire (P2) par la fermeture du deuxième élément de commutation (K1),
- dans laquelle l'arbre de commande (GW1) peut être relié au deuxième élément (E23) du troisième train planétaire (P3) par la fermeture du troisième élément de commutation (K2),
- dans laquelle le troisième élément (E31) du premier train planétaire (P1) peut être relié au premier élément (E12) du deuxième train planétaire (P2) par la fermeture du quatrième élément de commutation (K3),
- dans laquelle le troisième élément (E31) du premier train planétaire (P1) peut être relié au troisième élément (E32) du deuxième train planétaire (P2) par la fermeture du cinquième élément de commutation (K4),
**caractérisée en ce que** le troisième élément (E31) du premier train planétaire (P1) est en permanence calé en rotation avec un rotor (R) d'une machine électrique (EM1).

2. Boîte de vitesses (G) selon la revendication 1, **caractérisée en ce que** l'on engage
- le premier rapport avant (G1) par la fermeture du premier élément de commutation (B1) et du deuxième élément de commutation (K1),
- le deuxième rapport avant (G2) par la fermeture du premier élément de commutation (B1) et du quatrième élément de commutation (K3),
- le troisième rapport avant (G3) par la fermeture du premier élément de commutation (B1) et du troisième élément de commutation (K2),
- le quatrième rapport avant (G4) par la fermeture du troisième élément de commutation (K2) et du quatrième élément de commutation (K3),
- le cinquième rapport avant (G5) par la fermeture du deuxième élément de commutation (K1) et du troisième élément de commutation (K2),
- le sixième rapport avant (G6) par la fermeture du troisième élément de commutation (K2) et du cinquième élément de commutation (K4),
- le septième rapport avant (G7) par la fermeture du deuxième élément de commutation (K1) et du cinquième élément de commutation (K4), et
- le huitième rapport avant (G8) par la fermeture du quatrième élément de commutation (K3) et du cinquième élément de commutation (K4).

3. Boîte de vitesses (G) selon la revendication 1 ou la revendication 2, **caractérisée en ce que** le premier élément de commutation (B1) est formé par un élément de commutation à emboîtement, en particulier par un élément de commutation à crabots.

4. Boîte de vitesses (G) selon l'une quelconque des revendications précédentes, **caractérisée en ce que** la boîte de vitesses (G) présente un sixième et un septième éléments de commutation (K5, B2),
- dans laquelle le deuxième élément (E22) du deuxième train planétaire (P2) peut être relié au troisième élément (E33) du troisième train planétaire (P3) par la fermeture du sixième élément de commutation (K5),
- dans laquelle le deuxième élément (E23) du troisième train planétaire (P3) peut être calé en rotation par la fermeture du septième élément de commutation (B2),
- dans laquelle le sixième élément de commutation (K5) est fermé dans tous les rapports avant (G1 - G8) et le septième élément de commutation (B2) est ouvert dans tous les rapports avant (G1 - G8), et
- dans laquelle le troisième train planétaire (P3) est formé par une paire de roues moins.

5. Boîte de vitesses (G) selon la revendication 4, **caractérisée en ce que** le sixième et le septième éléments de commutation (K5, B2) sont formés par des éléments de commutation à emboîtement.

6. Boîte de vitesses (G) selon la revendication 5, **caractérisée en ce que** le sixième et le septième éléments de commutation (K5, B2) présentent une moitié d'élément de commutation commune.

7. Boîte de vitesses (G) selon l'une quelconque des revendications 4 à 6, **caractérisée en ce que** l'on engage un premier rapport arrière (R1) par la fermeture du premier élément de commutation (B1), du deuxième élément de commutation (K1) et du septième élément de commutation (B2) .

8. Boîte de vitesses (G) selon l'une quelconque des revendications 4 à 7, **caractérisée en ce que** l'on engage un deuxième rapport arrière (R2) par la fermeture du premier élément de commutation (B1), du quatrième élément de commutation (K3) et du septième élément de commutation (B2) .

9. Boîte de vitesses (G) selon l'une quelconque des revendications précédentes, **caractérisée en ce que** la boîte de vitesses (G) présente à une extrémité axiale un arbre de liaison (AN), qui peut être relié à l'arbre de commande (GW1) par un huitième élément de commutation (K0), dans laquelle l'arbre de liaison (AN) et l'arbre de sortie (GW2) sont disposés de façon coaxiale l'un à l'autre et à des extrémités axiales opposées de la boîte de vitesses (G), dans laquelle à partir de l'extrémité axiale de la boîte de vitesses (G) associée à l'arbre de liaison (AN) les trains planétaires (P1, P2, P3) sont disposés dans l'ordre axial suivant: premier train planétaire (P1), deuxième train planétaire (P2), troisième train planétaire (P3).

10. Boîte de vitesses (G) selon l'une quelconque des revendications 1 à 8, **caractérisée en ce que** la boîte de vitesses (G) présente à une extrémité axiale un arbre de liaison (AN), qui peut être relié à l'arbre de commande (GW1) par un huitième élément de commutation (K0), dans laquelle à partir de l'extrémité axiale de la boîte de vitesses (G) associée à l'arbre de liaison (AN) les trains planétaires (P1, P2, P3) sont disposés dans l'ordre axial suivant: troisième train planétaire (P3), deuxième train planétaire (P2), premier train planétaire (P1) .

11. Boîte de vitesses (G) selon une des revendications 9 à 10, **caractérisée en ce que** le huitième élément de commutation (K0) est formé par un élément de commutation à emboîtement.

12. Boîte de vitesses (G) selon une des revendications 9 à 10, **caractérisée en ce que** le huitième élément de commutation (K0) est formé par un élément de commutation par force avec une capacité variable de transmission de couple.

13. Boîte de vitesses (G) selon l'une quelconque des revendications 1 à 12, **caractérisée en ce qu'**une partie de l'arbre de commande (GW1) est disposée radialement à l'intérieur du deuxième et du troisième trains planétaires (P2, P3), dans laquelle le troisième élément de commutation (K2) est disposé axialement dans la région de l'extrémité axiale de la boîte de vitesses (G) associée à l'arbre de sortie (GW2).

14. Boîte de vitesses (G) selon l'une quelconque des revendications précédentes, **caractérisée en ce que** le deuxième élément de commutation (K1) est disposé au moins en partie radialement à l'intérieur du quatrième élément de commutation (K3).

15. Groupe motopropulseur hybride pour un véhicule à moteur équipé d'une boîte de vitesses (G) selon l'une quelconque des revendications 1 à 14.
